# EUROPEAN PATENT APPLICATION

(11) **EP 4 852 139 A1**
(43) Date of publication of application: **09.12.2026**
(21) Application number: 24931305.7
(22) Date of filing: 04.06.2024
(51) Int. Cl.: H01M 10/613, H01M 10/615, H01M 10/625, H01M 10/6557, H01M 50/204, H01M 50/244, H01M 50/249, H01M 50/242

(54) **BATTERY AND ELECTRIC DEVICE**

(30) Priority: 26.03.2024 CN 202420590820 U
(71) Applicant: Contemporary Amperex Technology Co., Limited, Ningde, Fujian 352100 (CN)
(72) Inventor: WANG, Yalei, Ningde, Fujian 352100 (CN); WANG, Liangyi, Ningde, Fujian 352100 (CN); ZHOU, Huiping, Ningde, Fujian 352100 (CN); QIN, Feng, Ningde, Fujian 352100 (CN); WANG, Peng, Ningde, Fujian 352100 (CN); WANG, Zhi, Ningde, Fujian 352100 (CN)
(74) Representative: Kraus & Lederer PartGmbB
(86) International application number: PCT/CN2024/097310
(87) International publication number: WO 2025/200127

(57) **Abstract**

Provided in the embodiments of the present application are a battery and an electric device. The battery comprises a case, thermal management components, supporting members and a plurality of battery cell groups. The plurality of battery cell groups are arranged in the case, and each battery cell group comprises at least one battery cell. In a first direction, the battery cell groups are provided on both sides of each thermal management component, and the thermal management components are configured to manage the temperature of battery cells. The supporting members are arranged in the case and are connected to the case. In the first direction, the supporting members and the thermal management components are stacked, and the supporting members support the thermal management components. The battery can reduce the risk that the battery cell groups on lower sides of the thermal management components are damaged due to the fact that said battery cell groups bear the gravity of the battery cell groups on upper sides of the thermal management components, thereby reducing the risk of the battery cells deforming and short-circuiting due to damage, and thus improving the reliability of the battery.

## Description

### CROSS-REFERENCE TO RELATED APPLICATION

The present application claims priority to Chinese Patent Application No. 202420590820.X, filed on March 26, 2024 and entitled "BATTERY AND ELECTRICAL DEVICE", which is incorporated herein by reference in its entirety.

### TECHNICAL FIELD

The present application relates to the technical field of batteries, and in particular, to a battery and an electrical device.

### BACKGROUND

Batteries are widely applied in electronic devices such as mobile phones, laptops, battery vehicles, electric vehicles, electric aircraft, electric ships, electric toy cars, electric toy ships, electric toy aircraft, and electric tools.

In the development of battery technology, besides improving the electrochemical performance of the batteries, the reliability of the batteries has always been the key performance of battery evaluation. However, how to improve the reliability of the batteries is a problem to be urgently solved in the battery technology.

### SUMMARY

The present application provides a battery and an electrical device, which can improve the reliability of the battery.

In a first aspect, an embodiment of the present application provides a battery, including a box body, a thermal management component, a supporting member, and a plurality of battery cell groups. The plurality of battery cell groups are disposed within the box body, and the battery cell group includes at least one battery cell. The battery cell groups are disposed on both sides of the thermal management component in a first direction, and the thermal management component is used to manage a temperature of the battery cell. The supporting member is disposed inside the box body and connected to the box body. In the first direction, the supporting member and the thermal management component are stacked, and the supporting member supports the thermal management component.

In foregoing technical solution, the battery cell group is disposed in the box body, and the box body may provide protection for the battery cell group to improve the reliability of the battery cell group. The battery cell groups are disposed on both sides of the thermal management component in the first direction, and the thermal management component may simultaneously manage the temperature of the battery cell groups on both sides, thereby improving a utilization rate of the thermal management component. The supporting member is disposed inside the box body and connected to the box body, the supporting member supports the thermal management component, the thermal management component may support the battery cell group located on an upper side of the thermal management component, and a gravity of the battery cell group located on the upper side of the thermal management component may be transferred to the supporting member through the thermal management component and transferred to the box body by the supporting member, thereby reducing a risk of damage to the battery cell group on a lower side of the thermal management component due to the gravity of the battery cell group on the upper side of the thermal management component being borne by the battery cell group on the lower side of the thermal management component, and thus reducing a risk that the battery cell on the lower side of the thermal management component is deformed or short-circuited due to damage, and further improving the reliability of the battery.

In some embodiments, the battery further includes a bonding layer connecting the thermal management component and the supporting member. The thermal management component may be fixed to the supporting member through the bonding layer, thereby reducing a risk of the thermal management component shaking in the box body.

In some embodiments, in the first direction, an accommodating groove is formed in one side of the thermal management component facing the supporting member, and at least a part of the bonding layer is accommodated in the accommodating groove. The accommodating groove can accommodate the bonding layer. On one hand, a risk of overflow of the bonding layer can be reduced. On the other hand, a contact area between the bonding layer and the thermal management component can be increased, bonding firmness between the thermal management component and the supporting member is improved, and meanwhile, direct contact between the thermal management component and the supporting member may be achieved, thereby better facilitating the thermal management component to manage the temperature of the battery cell group located on the lower side of the thermal management component.

In some embodiments, the battery also includes a locking member, which is configured to lock the thermal management component and the supporting member. The thermal management component may be fixed to the supporting member through the locking member, thereby reducing the risk of the thermal management component shaking in the box body.

In some embodiments, the thermal management component is provided with a first mounting hole, the supporting member is provided with a second mounting hole, and the locking member passes through the first mounting hole and the second mounting hole. By arranging the first mounting hole in the thermal management component and the second mounting hole in the supporting member, the thermal management component and the locking member may be positioned through the first mounting hole and the second mounting hole, and the thermal management component and the locking member may be locked after the locking member passes through the first mounting hole and the second mounting hole, so that the locking member can quickly lock the thermal management component and the supporting member.

In some embodiments, in a second direction, a plurality of first mounting holes are disposed on at least one side of the thermal management component, a plurality of second mounting holes are disposed on at least one side of the supporting member, the plurality of first mounting holes and the plurality of second mounting holes are arranged at intervals in a third direction, and the first direction, the second direction, and the third direction are mutually perpendicular, where the number of the second mounting holes is greater than the number of the first mounting holes. A connection between the thermal management component and the supporting member is stabilized by arranging the first mounting holes on at least one side of the thermal management component in the second direction and the second mounting holes on at least one side of the supporting member in the second direction. By arranging the plurality of first mounting holes and second mounting holes spaced apart in the third direction, the connection between the thermal management component and the supporting member in the third direction is more stable. By setting the number of the second mounting holes to be more than the number of the first mounting holes, the first mounting holes may be positioned by selecting different second mounting holes, so that the thermal management component may be mounted at different positions on the supporting member, with more flexible matching.

In some embodiments, a cavity is formed inside the supporting member. The arrangement of the cavity, on one hand, can reduce a weight of the supporting member, reduce consumables, and save costs; and on the other hand, can improve a compressive strength of the supporting member, and enhance a supporting capability of the supporting member.

In some embodiments, the battery includes the locking member and a reinforcing member. The locking member is configured to lock the thermal management component and the supporting member. The supporting member is provided with the second mounting hole for the locking member to pass through, and the second mounting hole is in communication with the cavity. The reinforcing member is at least partially accommodated in the cavity, the reinforcing member abuts against two opposite cavity wall surfaces of the cavity in the first direction, the third mounting hole is disposed at a position of the reinforcing member corresponding to the second mounting hole, and the third mounting hole is configured to engage with the locking member. By arranging the locking member to lock the thermal management component and the supporting member, the connection strength between the thermal management component and the supporting member can be enhanced. By arranging the reinforcing member, the strength of the supporting member can be strengthened, and by locking the locking member to the third mounting hole of the reinforcing member, the locking strength of the locking member can be improved, a risk that the locking member falls off can be reduced, and the connection stability between the thermal management component and the supporting member can be improved, thereby improving the structural stability of the battery.

In some embodiments, in the first direction, the thermal management component has a first surface facing away from the supporting member, and the battery cell group is bonded to the first surface. The thermal management component is provided with an edge portion, which is arranged along an edge of the thermal management component and protrudes from the first surface. By bonding the battery cell group to the first surface of the thermal management component, the connection strength between the battery cell group and the thermal management component can be improved. By arranging the edge portion at the edge of the thermal management component, a risk that an adhesive for bonding the battery cell group overflows to the outside of the thermal management component and contaminates other components in the box body may be reduced.

In some embodiments, the thermal management component includes a first plate body and a second plate body. The second plate body is located between the first plate body and the supporting member in the first direction, a groove is formed in one side of the second plate body facing the first plate body, and the first plate body is connected to the second plate body and covers the opening of the groove, so that the groove forms a flow channel located inside the thermal management component. By arranging the groove on the side of the second plate body facing the first plate body, after the first plate body and the second plate body are connected, the groove may form the flow channel for a fluid to circulate, making the thermal management component easy to machine.

In some embodiments, the battery further includes the bonding layer connecting the second plate body and the supporting member. In the first direction, protrusions are formed at positions corresponding to the groove on one side of the second plate body facing the supporting member, and the accommodating groove located between two adjacent protrusions is formed on the side of the second plate body facing the supporting member. At least a part of the bonding layer is accommodated in the accommodating groove. By forming the protrusions on the side of the second plate body facing the supporting member and forming the accommodating groove between the adjacent protrusions, the groove and the accommodating groove may be formed at one time during the machining of the second plate body. The accommodating groove generated during the machining of the groove is reasonably utilized and may be filled with the bonding layer, thereby improving the connection strength between the second plate body and the supporting member.

In some embodiments, in the first direction, the first plate body has the first surface facing away from the second plate body, and the battery cell group is bonded to the first surface. The first plate has an edge portion, which is provided along the edge of the first plate and protrudes from the first surface. By bonding the battery cell group to the first surface of the first plate body, the connection strength between the battery cell group and the first plate body can be improved. By bonding the battery cell group to the first surface of the first plate body, the connection strength between the battery cell group and the first plate body can be improved. By arranging the edge portion at the edge of the first plate body, the risk that the adhesive for bonding the battery cell group overflows to the outside of the first plate body and contaminates other components in the box body may be reduced.

In some embodiments, the first plate body and the second plate body are connected by welding. By welding the first plate body and the second plate body, the connection between the first plate body and the second plate body can be more stable.

In some embodiments, the groove is formed in the second plate body by stamping. Forming the groove by stamping the second plate body makes a forming method for the groove simple with low forming difficulty.

In a second aspect, an embodiment of the present application provides an electrical device, which includes the battery according to any one of the embodiments in the first aspect, and the battery is used to provide electric energy for the electrical device.

### BRIEF DESCRIPTION OF THE DRAWINGS

In order to illustrate the technical solutions of the embodiments of the present application more clearly, the drawings required in the embodiments of the present application are briefly introduced below. Apparently, the drawings described below are only some embodiments of the present application. For those of ordinary skill in the art, other drawings can also be obtained according to the drawings without involving any creative effort.
FIG. 1 is a schematic structural diagram of a vehicle provided in some embodiments of the present application;
FIG. 2 is an exploded view of a battery provided in some embodiments of the present application;
FIG. 3 is a schematic structural diagram of a battery provided in some embodiments of the present application;
FIG. 4 is an exploded view of a thermal management component and a supporting member provided in some embodiments of the present application;
FIG. 5 is a schematic structural diagram of a thermal management component and a supporting member provided in some embodiments of the present application;
FIG. 6 is an A-A section view of FIG. 5;
FIG. 7 is a partial enlarged view of a region B in FIG. 6;
FIG. 8 is a schematic structural diagram of a thermal management component provided in some embodiments of the present application;
FIG. 9 is an exploded view of a thermal management component provided in some embodiments of the present application; and
FIG. 10 is a schematic structural diagram of a thermal management component provided in still other embodiments of the present application.

Reference numerals: 1-supporting member; 11-second mounting hole; 12-cavity; 121-cavity wall surface; 2-thermal management component; 21-first mounting hole; 22-first surface; 23-edge portion; 24-first plate body; 25-second plate body 251-groove; 252-accommodating groove; 253-protrusion; 26-protruding portion; 3-box body; 31-first portion; 32- second portion; 4-battery cell group; 41-battery cell; 5-locking member; 6-reinforcing member; 61-third mounting hole; 7-bonding layer 10-battery; 20-controller; 30-motor; 100-vehicle; X-first direction; Y-second direction; Z-third direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various locations throughout the specification does not necessarily refer to the same embodiment, nor does it constitute an independent or alternative embodiment that is mutually exclusive of other embodiments.

In the description of the present application, it should be noted that, unless otherwise explicitly specified and defined, the terms "mounted", "connected", and "linked" should be comprehended in a broad sense. For example, the connection may be a fixed connection, a detachable connection, or an integral connection; and the connection may be a direct connection, an indirect connection through an intermediate medium, or an internal communication between two elements. Those of ordinary skill in the art may understand specific meanings of the foregoing terms in the present application according to specific cases.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, the battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, or the like, which is not limited in the embodiments of the present application.

In some embodiments, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may serve as a part of a chassis structure of the vehicle. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage cabinet, or the like.

The battery has prominent advantages such as a high energy density, minimal environmental pollution, a large power density, a long service life, a wide application scope, and a low self-discharge coefficient, which is a crucial component in modern new energy development.

The battery typically includes a box body, a thermal management component accommodated in the box body, and a plurality of battery cell groups. The battery cell group includes at least one battery cell, and the thermal management component is used to manage a temperature of a battery cell. Inside the box body, the plurality of battery cell groups may be arranged in various manners. For example, the plurality of battery cell groups may be horizontally arranged on the thermal management component, or may be stacked in a gravity direction, and the thermal management component may be disposed between two battery cells adjacent in the gravity direction.

In the battery in which the battery cell groups are stacked in the gravity direction, the battery cell group located at a lower layer needs to bear the gravity of the thermal management component and the battery cell groups disposed thereabove, and in many battery application scenarios, an internal structure of the battery is prone to damage, resulting in low battery reliability. Taking a battery of a heavy-duty truck as an example, during the installation of the battery of the heavy-duty truck, since the truck requires a large number of battery cell groups to maintain requirements and performance of the battery, and a position for installing the battery on the truck is limited, the battery with the battery cell groups stacked in the gravity direction is often required. During the normal driving or construction operation of the heavy-duty truck, the battery is prone to jolting, the battery has a large mass, and as a result, the battery cell group located at the lower layer is prone to damage, leading to low battery reliability.

Based on the foregoing considerations, in order to mitigate the problem of low reliability of the battery, an embodiment of the present application provides a battery. A box body of the battery is internally provided with a supporting member connected to the box body. The supporting member supports a thermal management component, and battery cell groups are disposed on both sides of the thermal management component.

By arranging the supporting member to be connected to the box body and to support the thermal management component, the thermal management component supporting the battery cell groups may transfer gravity to the supporting member, and then the gravity is directly transferred to the box body through the supporting member, thereby reducing a risk that the battery cell groups above the thermal management component crush the battery cell groups below the thermal management component, and improving the reliability of the battery.

The technical solutions described in the embodiments of the present application are applicable to the battery and an electrical device using the battery.

The electrical device may be a vehicle, a mobile phone, a portable device, a laptop, a ship, a spacecraft, an electric toy, an electric tool, etc. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes aircraft, rockets, space shuttles, spaceships, and the like. The electric toy includes fixed or mobile electric toys, such as game consoles, electric car toys, electric ship toys, and electric aircraft toys. The electric tool includes metal cutting electric tools, grinding electric tools, assembly electric tools, and railway electric tools, such as electric drills, electric grinders, electric wrenches, electric screwdrivers, electric hammers, impact drills, concrete vibrators, and electric planers.

Hereinafter, for convenience of description, the electrical device being a vehicle is taken as an example for description.

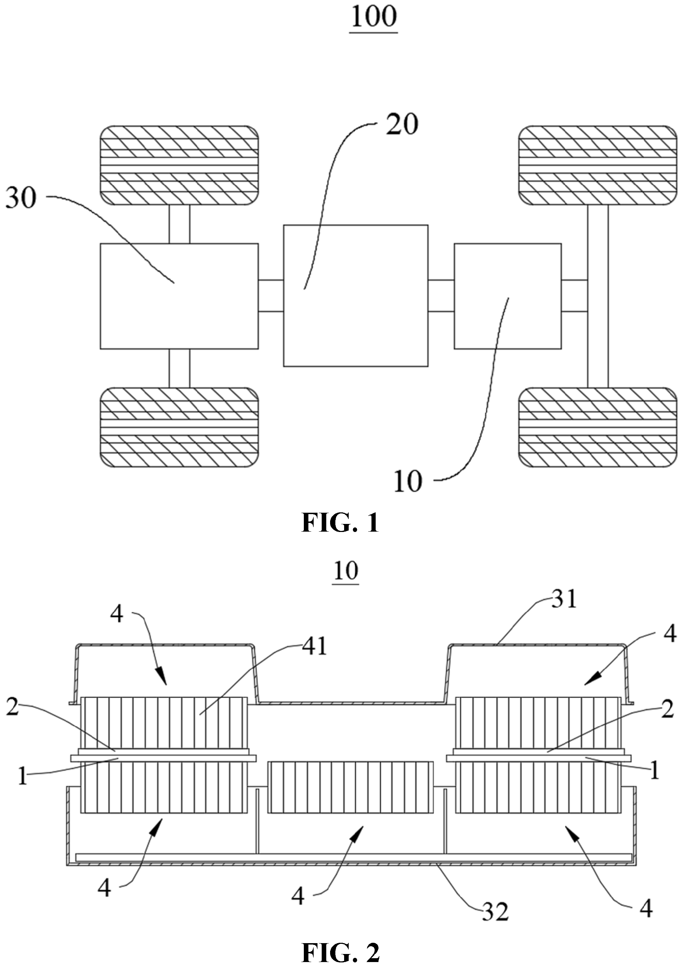

Referring to FIG. 1, FIG. 1 is a schematic structural diagram of a vehicle 100 provided in some embodiments of the present application. The vehicle 100 is internally provided with a battery 10, and the battery 10 may be disposed at a bottom or head or tail of the vehicle 100. The battery 10 may be used to power the vehicle 100. For example, the battery 10 may be used as an operating power source of the vehicle 100.

The vehicle 100 may further include a controller 20 and a motor 30. The controller 20 is used to control the battery 10 to supply power to the motor 30, such as to meet operation power demands during start, navigation, and running of the vehicle 100.

In some embodiments of the present application, the battery 10 not only may serve as the operating power source of the vehicle 100, but also may serve as a driving power source of the vehicle 100, so as to replace or partially replace fuel or natural gas to provide driving power for the vehicle 100.

Referring to FIG. 2, FIG. 2 is an exploded view of a battery 10 provided in some embodiments of the present application. The battery 10 includes a box body 3, a thermal management component 2, and a plurality of battery cell groups 4. The plurality of battery cell groups 4 are disposed in the box body 3. The battery cell group 4 includes at least one battery cell 41.

The box body 3 is a component for accommodating the battery cell 41, and the box body 3 provides an accommodation space for the battery cell group 4. The box body 3 may serve as a part of a structure of the electrical device. For example, in the embodiment where the electrical device is the vehicle 100, the box body 3 may serve as a part of a chassis structure of the vehicle 100. A material of the box body 3 may be copper, iron, aluminum, stainless steel, aluminum alloy, or the like.

In some embodiments, the box body 3 may include a first portion 31 and a second portion 32, which are mutually covered to define an accommodation space for accommodating the battery cell 41. The first portion 31 and the second portion 32 may be in various shapes, such as a cuboid, or a cylinder. The first portion 31 may be of a hollow structure with one side open, the second portion 32 may also be of a hollow structure with one side open, and an open side of the second portion 32 covers an open side of the first portion 31, so as to form the box body 3 with the accommodation space. Alternatively, the first portion 31 may be of a hollow structure with one side open, the second portion 32 may be of a plate-shaped structure, and the second portion 32 covers the open side of the first portion 31, so as to form the box body 3 with the accommodation space. The first portion 31 and the second portion 32 may be sealed through a sealing element, and the sealing element may be a sealing ring, a sealant, or the like.

The thermal management component 2 may be a component with heating and cooling functions. When a temperature of the battery cell group 4 is too high, the thermal management component 2 cools down the battery cell group 4; and when the temperature of the battery cell group 4 is too low, the thermal management component 2 heats up the battery cell group 4. The thermal management component 2 may be a water cooling plate, a heating plate, and the like. By adjusting the temperature of the battery cell group 4 through the thermal management component 2, the battery cell group 4 can operate in a suitable environment, thereby reducing a risk of thermal runaway of the battery 10, and improving the operating efficiency and reliability of the battery 10.

As an example, the thermal management component 2 is used to accommodate a fluid to adjust the temperature of the battery cell 41. For example, the thermal management component 2 is the water cooling plate.

The battery cell group 4 may include only one battery cell 41, or may include a plurality of battery cells 41. When the battery cell group 4 includes a plurality of battery cells 41, the plurality of battery cells 41 may be connected in series, in parallel, or in parallel-series connection. The parallel-series connection means that the plurality of battery cells 41 are connected both in series and in parallel. The plurality of battery cells 41 are first connected in series, in parallel, or in series-parallel connection to form the battery cell group 4, and then the plurality of battery cell groups 4 are connected in series, in parallel, or in series-parallel connection to form a whole that is accommodated in the box body 3. The plurality of battery cell groups 4 may be horizontally arranged; or, the plurality of battery cell groups 4 may be arranged in the gravity direction; or, part of the battery cell groups 4 may be horizontally arranged, and the other part of the battery cell groups 4 may be arranged in the gravity direction. One thermal management component 2 may correspondingly manage the temperature of one battery cell group 4, or one thermal management component 2 may manage the temperature of the plurality of battery cell groups 4. For example, the plurality of battery cell groups 4 are arranged in a horizontal direction, and one thermal management component 2 is disposed between adjacent battery cell groups 4. For another example, the plurality of battery cell groups 4 are arranged in the gravity direction, and one thermal management component 2 is disposed between adjacent battery cell groups 4.

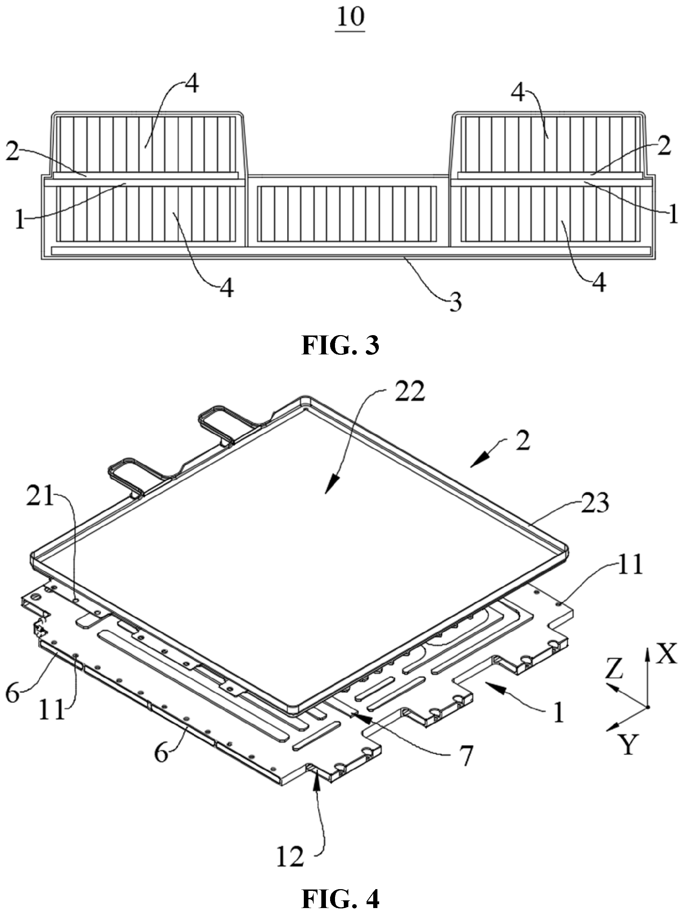

Referring to FIG. 3, FIG. 3 is a schematic structural diagram of a battery 10 provided in some embodiments of the present application. The battery 10 includes a supporting member 1, a thermal management component 2, a box body 3, and a plurality of battery cell groups 4. The plurality of battery cell groups 4 are disposed in the box body 3. The battery cell group 4 includes at least one battery cell 41. The battery cell groups 4 are disposed on both sides of the thermal management component 2 in a first direction X, and the thermal management component 2 is used to manage the temperature of the battery cell 41. The supporting member 1 is disposed inside the box body 3 and connected to the box body 3. In the first direction X, the supporting member 1 and the thermal management component 2 are stacked, and the supporting member 1 supports the thermal management component 2.

There may be one or more supporting members 1. The supporting member 1 may be of a plate-shaped structure or a frame structure. The supporting member 1 may be fixedly connected to the box body 3, for example, the supporting member 1 is welded inside the box body 3. Alternatively, the supporting member 1 may be detachably connected to the box body 3, for example, the supporting member 1 is locked inside the box body 3 through bolts. The thermal management component 2 may be in direct contact with the supporting member 1, for example, the thermal management component 2 is placed on the supporting member 1, and the supporting member 1 supports the thermal management component 2. Alternatively, the thermal management component 2 may be indirectly connected to the supporting member 1, for example, an adhesive layer is disposed between the supporting member 1 and the thermal management component 2, and the supporting member 1 is connected to the thermal management component 2 through the adhesive layer. The thermal management component 2 may be located outside the supporting member 1. Alternatively, the supporting member 1 may cover at least a part of the thermal management component 2 and support the thermal management component 2. The supporting member 1 may be made of a metal material, such as copper, iron, aluminum, stainless steel, or an aluminum alloy.

The supporting member 1 and the thermal management component 2 are stacked in the first direction X, and the supporting member 1 supports the thermal management component 2. That is, the supporting member 1 is located on a lower side of the thermal management component 2. The supporting member 1 plays a supporting role for the thermal management component 2. The supporting member 1 can bear the gravity of the thermal management component 2 and the gravity of the battery cell group 4 located on an upper side of the thermal management component 2. The first direction X may be parallel to the gravity direction. The gravity of the thermal management component 2 is transferred from top to bottom to the supporting member 1, and then from the supporting member 1 to the box body 3. It should be understood that the supporting member 1 is located between the battery cell group 4 on the upper side of the thermal management component 2 and the battery cell group 4 on the lower side of the thermal management component 2.

For the battery cell group 4 located on the upper side of the thermal management component 2, the battery cell group 4 may be placed only on the thermal management component 2 or may be connected to the thermal management component 2, for example, the battery cell group 4 is bonded to the thermal management component 2. For the electrode assembly located on the lower side of the thermal management component 2, the battery cell group 4 may have a gap with the thermal management component 2, or may be in contact with the thermal management component 2.

In this embodiment of the present application, the battery cell group 4 is disposed in the box body 3, and the box body 3 may provide protection for the battery cell group 4 to improve the reliability of the battery cell group 4. The battery cell groups 4 are disposed on both sides of the thermal management component 2 in the first direction X, and the thermal management component 2 may simultaneously manage the temperature of the battery cell groups 4 on both sides, thereby improving a utilization rate of the thermal management component 2. The supporting member 1 is disposed inside the box body 3 and connected to the box body 3, the supporting member 1 supports the thermal management component 2, the thermal management component 2 may support the battery cell group 4 located on the upper side of the thermal management component 2, and the gravity of the battery cell group 4 located on the upper side of the thermal management component 2 may be transferred to the supporting member 1 through the thermal management component 2 and transferred to the box body 3 by the supporting member 1, thereby reducing a risk of damage to the battery cell group 4 on the lower side of the thermal management component 2 due to the gravity of the battery cell group 4 on the upper side of the thermal management component 2 being borne by the battery cell group 4 on the lower side of the thermal management component 2, and thus reducing a risk that the battery cell 41 is deformed or short-circuited due to damage, and further improving the reliability of the battery 10.

In some embodiments, referring to FIG. 4, FIG. 4 is an exploded view of a thermal management component 2 and a supporting member 1 provided in some embodiments of the present application. The battery 10 further includes a bonding layer 7 connecting the thermal management component 2 and the supporting member 1.

The bonding layer 7 may be formed by applying glue to the thermal management component 2, or may be a bonding sheet coated with glue. The glue for the bonding layer 7 may be shadowless glue, glass glue, polyacrylic acid hot melt glue, or the like.

By arranging the bonding layer 7 between the thermal management component 2 and the supporting member 1, the bonding layer 7 may fix the thermal management component 2 to the supporting member 1, thereby reducing a risk of the thermal management component 2 shaking in the box body 3.

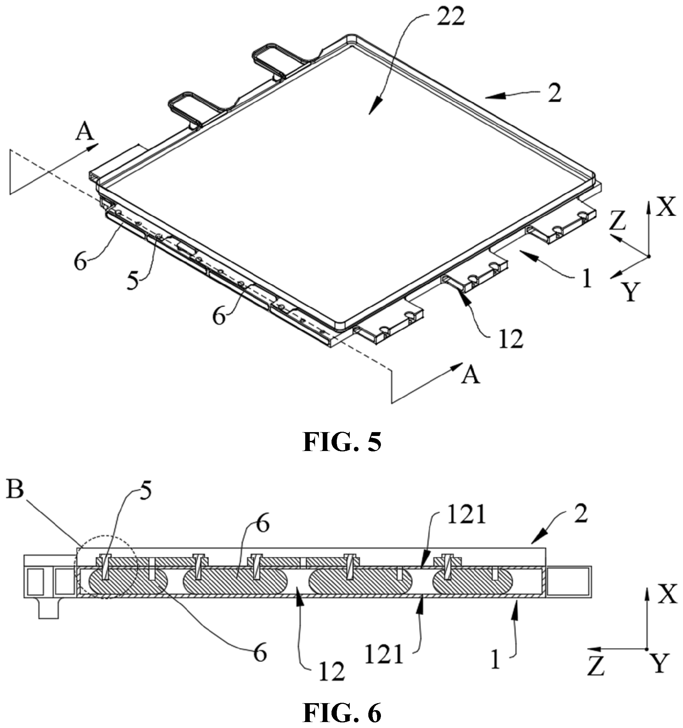

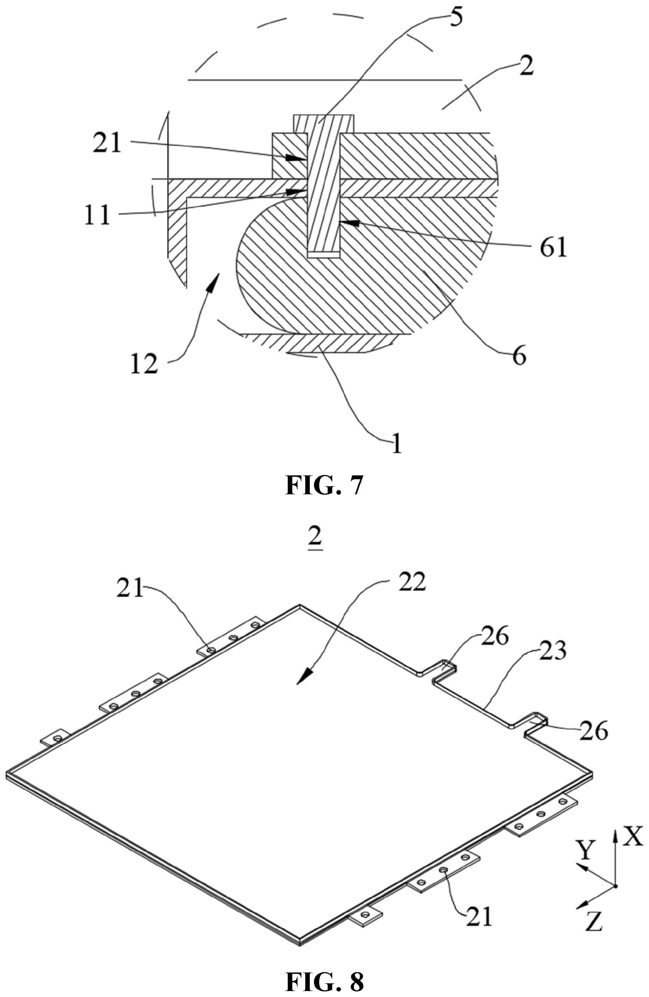

In some embodiments, referring to FIG. 5 to FIG. 7, FIG. 5 is a schematic structural diagram of a thermal management component 2 and a supporting member 1 provided in some embodiments of the present application; FIG. 6 is an A-A sectional view of FIG. 5; and FIG. 7 is a partial enlarged view of a region B in FIG. 6. The battery 10 also includes a locking member 5, which is configured to lock the thermal management component 2 and the supporting member 1.

The locking member 5 is a component for locking the thermal management component 2 and the supporting member 1. When the locking member 5 locks the thermal management component 2 and the supporting member 1, the thermal management component 2 and the supporting member 1 cannot move relative to each other. The thermal management component 2 and the supporting member 1 may be in locking connection only through the locking member. Alternatively, the thermal management component 2 and the supporting member 1 may be fixed together through the bonding layer 7 and the locking member 5, where the locking member 5 may be a bolt, a screw, a lock pin, or the like.

The thermal management component 2 may be fixed to the supporting member 1 through the locking member 5, thereby reducing the risk of the thermal management component 2 shaking in the box body 3.

In some embodiments, please continue to refer to FIG. 5 to FIG. 7, the thermal management component 2 is provided with a first mounting hole 21, the supporting member 1 is provided with a second mounting hole 11, and the locking member 5 passes through the first mounting hole 21 and the second mounting hole 11.

There may be one or more first mounting holes 21. The first mounting hole 21 may be formed in a center position of the thermal management component 2 or in an edge position of the thermal management component 2.

There may be one or more second mounting holes 11. The second mounting hole 11 may be formed in a center position of the supporting member 1 or in an edge position of the supporting member 1.

The number of first mounting holes 21 and the number of second mounting holes 11 may be the same or different.

Taking the locking member 5 being the screw as an example, the first mounting hole 21 may be a cylindrical hole, the second mounting hole 11 may be a threaded hole, and the screw is in screw joint to the second mounting hole 11 after passing through the first mounting hole 21 to lock the thermal management component 2 and the supporting member 1. Taking the locking member 5 being the bolt as an example, both the first mounting hole 21 and the second mounting hole 11 may be cylindrical holes, and the locking member 5 passes through the first mounting hole 21 and the second mounting hole 11 and cooperates with a nut to lock the thermal management component 2 and the supporting member 1.

By arranging the first mounting hole 21 in the thermal management component 2 and the second mounting hole 11 in the supporting member 1, the thermal management component 2 and the locking member 5 may be positioned through the first mounting hole 21 and the second mounting hole 11, and the thermal management component 2 and the locking member 5 may be locked after the locking member 5 passes through the first mounting hole 21 and the second mounting hole 11, so that the locking member 5 can quickly lock the thermal management component 2 and the supporting member 1.

In some embodiments, please continue to refer to FIG. 5 to FIG. 7, in a second direction Y, a plurality of first mounting holes 21 are disposed on at least one side of the thermal management component 2, a plurality of second mounting holes 11 are disposed on at least one side of the supporting member 1, the plurality of first mounting holes 21 and the plurality of second mounting holes 11 are arranged at intervals in a third direction Z, and the first direction X, the second direction Y, and the third direction Z are mutually perpendicular. The number of the second mounting holes 11 is greater than the number of the first mounting holes 21.

Only one side of the thermal management component 2 in the second direction Y may be provided with the first mounting hole 21, or both sides of the thermal management component 2 in the second direction Y may be provided with the first mounting holes 21. Only one side of the supporting member 1 in the second direction Y may be provided with the second mounting hole 11, or both sides of the supporting member 1 in the second direction Y may be provided with the second mounting holes 11. In the third direction Z, a spacing between the first mounting holes 21 may be the same or different; and a spacing between the second mounting holes 11 may be the same or different.

As an example, in the second direction Y, a plurality of first mounting holes 21 are disposed on both sides of the thermal management component 2, a plurality of second mounting holes 11 are disposed on both sides of the supporting member 1, the first mounting holes 21 and the second mounting holes 11 are arranged at intervals in the first direction X, the plurality of first mounting holes 21 are arranged at intervals in the third direction Z, the plurality of second mounting holes 11 are arranged at intervals in the third direction Z, and the number of the second mounting holes 11 is greater than the number of the first mounting holes 21. The first direction X, the second direction Y, and the third direction Z are mutually perpendicular.

A connection between the thermal management component 2 and the supporting member 1 is stabilized by arranging the first mounting holes 21 on at least one side of the thermal management component 2 in the second direction Y and the second mounting holes 11 on at least one side of the supporting member 1 in the second direction Y. By arranging the plurality of first mounting holes 21 and second mounting holes 11 spaced apart in the third direction Z, the connection between the thermal management component 2 and the supporting member 1 in the third direction Z is more stable. By setting the number of the second mounting holes 11 to be more than the number of the first mounting holes 21, the first mounting holes 21 may be positioned by selecting different second mounting holes 11, so that the thermal management component 2 may be mounted at different positions on the supporting member 1, with more flexible matching.

In some embodiments, referring to FIG. 5 to FIG. 7, a cavity 12 is formed inside the supporting member 1.

The cavity 12 may be completely disposed inside the supporting member 1, and the cavity 12 is sealed inside the supporting member 1. Alternatively, the cavity 12 may pass through a surface of the supporting member 1, and the cavity 12 is in communication with the outside.

By forming the cavity 12 inside the supporting member 1, the arrangement of the cavity 12, on one hand, can reduce a weight of the supporting member 1, reduce consumables, and save costs; and on the other hand, can improve a compressive strength of the supporting member 1, and enhance a supporting capability of the supporting member 1.

In some embodiments, please continue to refer to FIG. 6 and FIG. 7, the battery 10 includes the locking member 5 and a reinforcing member 6. The locking member 5 is configured to lock the thermal management component 2 and the supporting member 1. The supporting member 1 is provided with the second mounting hole 11 for the locking member 5 to pass through, and the second mounting hole 11 is in communication with the cavity 12. The reinforcing member 6 is at least partially accommodated in the cavity 12, the reinforcing member 6 abuts against two opposite cavity wall surfaces 121 of the cavity 12 in the first direction X, the third mounting hole 61 is disposed at a position of the reinforcing member 6 corresponding to the second mounting hole 11, and the third mounting hole 61 is configured to engage with the locking member 5.

The entire reinforcing member 6 may be accommodated in the cavity 12, or only a part of the reinforcing member 6 may be accommodated in the cavity 12.

The third mounting hole 61 is configured to engage with the locking member 5, so that the locking member 5 locks the thermal management component 2 and the supporting member 1. The locking member 5 may be of various structures. For example, the locking member 5 is a lock pin, which passes through the first mounting hole 21 and the second mounting hole 11 and forms an interference fit with the third mounting hole 61 to lock the thermal management component 2 and the supporting member 1. For another example, the locking member 5 is a screw, the third mounting hole 61 is a threaded hole, and the locking member 5 passes through the first mounting hole 21 and the second mounting hole 11 and forms a threaded fit with the third mounting hole 61. It should be noted that when the locking member 5 is the screw, the second mounting hole 11 may be a cylindrical hole or a threaded hole that is in threaded connection to the screw.

By arranging the locking member 5 to lock the thermal management component 2 and the supporting member 1, the connection strength between the thermal management component 2 and the supporting member 1 can be enhanced. By arranging the reinforcing member 6, the strength of the supporting member 1 can be strengthened, and by locking the locking member 5 to the third mounting hole 61 of the reinforcing member 6, the locking strength of the locking member 5 can be improved, a risk that the locking member 5 falls off can be reduced, and the connection stability between the thermal management component 2 and the supporting member 1 can be improved, thereby improving the structural stability of the battery 10.

In some embodiments, referring to FIG. 8, FIG. 8 is a schematic structural diagram of the thermal management component 2 provided in some embodiments of the present application. In the first direction X, the thermal management component 2 has a first surface 22 facing away from the supporting member 1, and the battery cell group 4 is bonded to the first surface 22. The thermal management component 2 is provided with an edge portion 23, which is arranged along an edge of the thermal management component 2 and protrudes from the first surface 22.

The first surface 22 is a surface of the thermal management component 2 used to support the battery cell group 4. The first surface 22 may be a curved surface or a flat surface.

The edge portion 23 protruding from the first surface 22 means that at least a part of the edge portion 23 protrudes from the first surface 22 in a direction facing away from the supporting member 1. The edge portion 23 may be of a closed structure extending one full circle along the edge of the thermal management component 2, that is, a head end and a tail end of the edge portion 23 are connected. Alternatively, the edge portion 23 may be of a non-closed structure that does not extend one full circle along the edge of the thermal management component 2, that is, the head end and the tail end of the edge portion 23 are not connected.

As an example, in the embodiment shown in FIG. 8, the edge portion 23 is of the closed structure.

The edge portion 23 may be a continuous frame-shaped protrusion 253 surrounding a periphery of the battery cell group 4, or may be a plurality of discontinuous protrusions 253 surrounding the periphery of the battery cell group 4, appropriately preventing the bonding layer between the battery cell group 4 and the first surface 22 from overflowing into other components inside the box body 3.

By bonding the battery cell group 4 to the first surface 22 of the thermal management component 2, the connection strength between the battery cell group 4 and the thermal management component 2 can be improved. By arranging the edge portion 23 at the edge of the thermal management component 2, the edge portion 23 may be disposed around the battery cell group 4, thereby reducing the risk that an adhesive for bonding the battery cell group 4 overflows to the outside of the thermal management component 2 and contaminates other components in the box body 3.

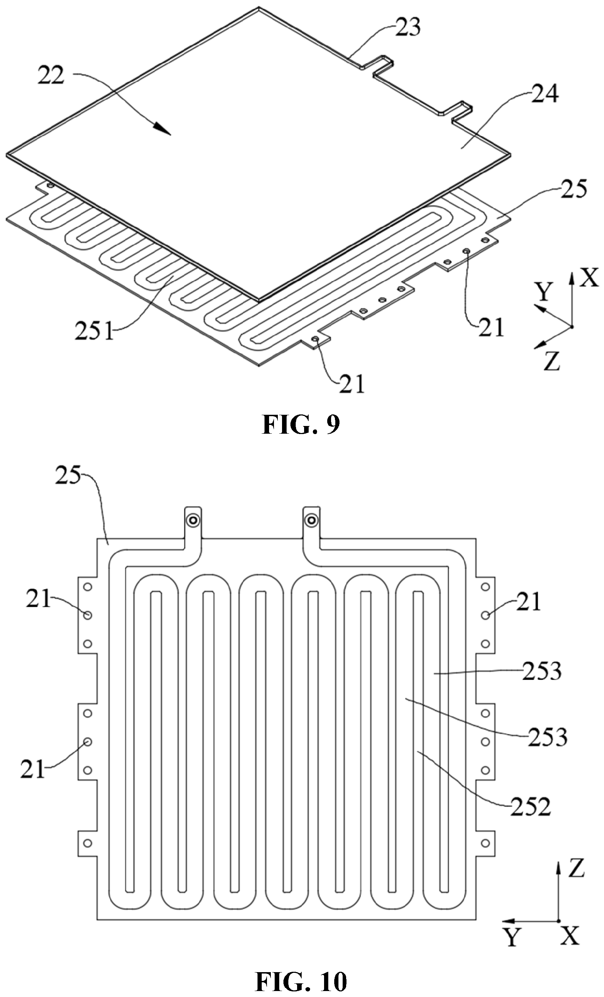

In some embodiments, referring to FIG. 9, FIG. 9 is an exploded view of the thermal management component 2 provided in some embodiments of the present application. The thermal management component 2 includes a first plate body 24 and a second plate body 25. The second plate body 25 is located between the first plate body 24 and the supporting member 1 in the first direction X, a groove 251 is formed in one side of the second plate body 25 facing the first plate body 24, and the first plate body 24 is connected to the second plate body 25 and covers the opening of the groove 251, so that the groove 251 forms a flow channel located inside the thermal management component 2.

The entire first plate body 24 may be indirectly connected to the supporting member 1, and the second plate body 25 may be disposed between the first plate body 24 and the supporting member 1, or part of the first plate body 24 may be directly connected to the supporting member 1.

By arranging the groove 251 on the side of the second plate body 25 facing the first plate body 24, after the first plate body 24 and the second plate body 25 are connected, the groove 251 may form the flow channel for the fluid to circulate, making the thermal management component 2 easy to machine.

In some embodiments, referring to FIG. 10, FIG. 10 is a schematic structural diagram of the thermal management component 2 provided in still other embodiments of the present application. In the first direction X, an accommodating groove 252 is formed in one side of the thermal management component 2 facing the supporting member 1, and at least a part of the bonding layer 7 is accommodated in the accommodating groove 252.

The bonding layer 7 may be entirely accommodated in the accommodating groove 252, and the supporting member 1 is connected to the thermal management component 2 by contacting the bonding layer 7 within the accommodating groove 252. Alternatively, a part of the bonding layer 7 may be accommodated within the accommodating groove 252, while the other portion is located outside the accommodating groove 252, and the supporting member 1 is connected to the thermal management component 2 by contacting the bonding layer 7 inside and outside the accommodating groove 252. The bonding layer 7 may fill the entire accommodating groove 252, or only a part of the bonding layer 7 may fill a part of the accommodating groove 252.

The accommodating groove 252 may be a continuous groove body, and is distributed on one side of the thermal management component 2 facing the supporting member 1. Alternatively, the accommodating groove 252 may be a plurality of groove bodies, and the plurality of groove bodies are arranged at intervals on the side of the thermal management component 2 facing the supporting member 1.

In the foregoing embodiment, the accommodating groove 252 can accommodate the bonding layer 7. On one hand, the risk of overflow of the bonding layer 7 can be reduced. On the other hand, a contact area between the bonding layer 7 and the thermal management component 2 can be increased, bonding firmness between the thermal management component 2 and the supporting member 1 is improved, and meanwhile, direct contact between the thermal management component and the supporting member 1 may be achieved, thereby better facilitating the thermal management component 2 to manage the temperature of the battery cell group 4 located on the lower side of the thermal management component 2.

In some embodiments, please refer to FIG. 9 and FIG. 10. The battery 10 also includes the bonding layer 7, which connects the second plate body 25 and the supporting member 1. In the first direction X, the protrusions 253 are formed at positions corresponding to the groove 251 on one side of the second plate body 25 facing the supporting member 1, and the accommodating groove 252 located between two adjacent protrusions 253 is formed on the side of the second plate body 25 facing the supporting member 1. At least a part of the bonding layer 7 is accommodated in the accommodating groove 252.

As an example, as shown in FIG. 9 and FIG. 10, the side of the second plate body 25 facing the first plate body 24 is provided with the groove 251, the side of the second plate body 25 facing away from the first plate body 24 is provided with the protrusions 253, the protrusions 253 correspond to the groove 251, and the accommodating groove 252 is located between two adjacent protrusions 253.

By forming the protrusions 253 on the side of the second plate body 25 facing the supporting member 1 and forming the accommodating groove 252 between the adjacent protrusions 253, the groove 251 and the accommodating groove 252 may be formed at one time during the machining of the second plate body 25. The accommodating groove 252 generated during the machining of the groove 251 is reasonably utilized and may be filled with the bonding layer 7, thereby improving the connection strength between the second plate body 25 and the supporting member 1.

In some embodiments, please refer to FIG. 8. In the first direction X, the first plate body 24 has the first surface 22 facing away from the second plate body 25, and the battery cell group 4 is bonded to the first surface 22. The edge portion 23 is disposed on the first plate body 24, is disposed along the edge of the first plate body 24, and protrudes from the first surface 22.

The first surface 22 is a surface of the first plate body 24 for supporting the battery cell group 4. The first surface 22 may be a curved surface or a flat surface.

The edge portion 23 may be of a closed structure extending one full circle along the edge of the first plate body 24, that is, the head end and the tail end of the edge portion 23 are connected. Alternatively, the edge portion 23 may be of a non-closed structure that does not extend one full circle along the edge of the first plate body 24, that is, the head end and the tail end of the edge portion 23 are not connected.

As an example, as shown in FIG. 8, the edge of the first plate body 24 is connected to two protruding portions 26. After the first plate body 24 and the second plate body 25 form the flow channel, the flow channel is provided with a liquid inlet and a liquid outlet. The two protruding portions 26 are respectively located on an upper side of the liquid inlet and an upper side of the liquid outlet respectively. The edge portion 23 is arranged along an edge of an outer contour jointly defined by the protruding portions 26 and the first plate body 24, so as to form the edge portion 23 of the closed structure.

By bonding the battery cell group 4 to the first surface 22 of the first plate body 24, the connection strength between the battery cell group 4 and the first plate body 24 can be improved. By bonding the battery cell group 4 to the first surface 22 of the first plate body 24, the connection strength between the battery cell group 4 and the first plate body 24 can be improved. By arranging the edge portion 23 at the edge of the first plate body 24, the edge portion 23 may be disposed around the battery cell group 4, thereby reducing the risk that the adhesive for bonding the battery cell group 4 overflows to the outside of the first plate body 24 and contaminates other components in the box body 3.

In some embodiments, the first plate body 24 and the second plate body 25 are connected by welding.

The welding may be brazing, laser welding, gas welding, or the like.

By welding the first plate body 24 and the second plate body 25, the connection between the first plate body 24 and the second plate body 25 can be more stable.

In some embodiments, the groove 251 is formed in the second plate body 25 by stamping.

The second plate body 25 is a stamped member, and while the groove 251 is stamped in the first surface 22 of the second plate body 25, the protrusions 253 corresponding to the groove 251 may be obtained on the second surface of the second plate body 25 opposite to the first surface 22.

Forming the groove 251 by stamping the second plate body 25 makes a forming method for the groove 251 simple with low forming difficulty.

In the embodiment where the protrusions 253 are formed on the second plate body 25, the protrusions 253 can be formed correspondingly by stamping the groove 251 in the second plate body 25, thereby reducing the difficulty of forming the protrusions 253.

An embodiment of the present application provides an electrical device, which includes the battery 10 according to any one of the foregoing embodiments, and the battery 10 is used to provide electric energy for the electrical device.

An embodiment of the present application provides a battery 10. The battery 10 includes a box body 3, a supporting member 1, a thermal management component 2, and a plurality of battery cell groups 4. The supporting member 1 is disposed inside the box body 3 and connected to the box body 3. The thermal management component 2 is disposed above the supporting member 1. An upper side of the thermal management component 2 carries the battery cell group 4, and the battery cell group 4 is also disposed below the supporting member 1. The thermal management component 2 includes a first plate body 24 and a second plate body 25. A groove 251 is disposed in one side of the second plate body 25 facing the first plate body 24, and an accommodating groove 252 is disposed in one side facing the supporting member 1. The groove 251 cooperates with the first plate body 24 to form a flow channel, the accommodating groove 252 accommodates a bonding layer 7, and the second plate body 25 is connected to the supporting member 1 through the bonding layer 7. The supporting member 1 is provided with a cavity 12, and a reinforcing member 6 is disposed inside the cavity 12. The second plate body 25 is provided with a plurality of first mounting holes 21, the supporting member 1 is provided with a plurality of second mounting holes 11, and the reinforcing member 6 is provided with a third mounting hole 61. The second plate body 25 and the supporting member 1 are locked together after a locking member 5 passes through the first mounting holes 21 and the second mounting holes 11 and is connected to the third mounting hole 61. A first surface 22 is disposed on one side of the first plate body 24 facing away from the second plate body 25, and the battery cell group 4 is bonded to the first surface 22. The first surface 22 is provided with an edge portion 23 that surrounds a periphery of the battery cell group 4 on the thermal management component 2.

By locking the second plate body 25 and the supporting member 1 through the bonding layer 7 and the locking member 5, double locking between the thermal management component 2 and the supporting member 1 may be implemented, making the connection between the thermal management component 2 and the supporting member 1 more stable. The first plate body 24 supports the battery cell group 4, the supporting member 1 supports the first plate body 24 through the second plate body 25, the supporting member 1 is connected to the box body 3, and a gravity of the battery cell group 4 is transferred to the box body 3, thereby reducing a risk that the battery cell group 4 located below the thermal management component 2 supports the battery cell group 4 located on the upper side of the thermal management component 2 and thus is damaged. By arranging the edge portion 23, a risk of overflow of an adhesive between the battery cell group 4 and the first surface 22 to the outside of the first surface 22, contaminating other components inside the box body 3 is reduced.

Although the present application has been described with reference to the preferred embodiments, various improvements may be made without departing from the scope of the present application, and components therein may be replaced with equivalents. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A battery, comprising:
a box body;
a plurality of battery cell groups, disposed in the box body, the battery cell group comprising at least one battery cell;
a thermal management component, the battery cell groups being disposed on both sides of the thermal management component in a first direction, and the thermal management component being used to manage a temperature of the battery cell; and
a supporting member, disposed within the box body and connected to the box body, the supporting member and the thermal management component being stacked in the first direction, and the supporting member supporting the thermal management component.

2. The battery according to claim 1, further comprising a bonding layer connecting the thermal management component and the supporting member.

3. The battery according to claim 2, wherein in the first direction, an accommodating groove is formed in one side of the thermal management component facing the supporting member, and at least a part of the bonding layer is accommodated in the accommodating groove.

4. The battery according to any one of claims 1 to 3, further comprising a locking member, the locking member being configured to lock the thermal management component and the supporting member.

5. The battery according to claim 4, wherein the thermal management component is provided with a first mounting hole, the supporting member is provided with a second mounting hole, and the locking member passes through the first mounting hole and the second mounting hole.

6. The battery according to claim 5, wherein in a second direction, a plurality of first mounting holes are disposed on at least one side of the thermal management component, a plurality of second mounting holes are disposed on at least one side of the supporting member, the plurality of first mounting holes and the plurality of second mounting holes are arranged at intervals in a third direction, and the first direction, the second direction, and the third direction are mutually perpendicular,
wherein the number of the second mounting holes is greater than the number of the first mounting holes.

7. The battery according to any one of claims 1 to 6, wherein a cavity is formed inside the supporting member.

8. The battery according to claim 7, wherein the battery comprises a locking member and a reinforcing member, the locking member is configured to lock the thermal management component and the supporting member, the supporting member is provided with a second mounting hole for the locking member to pass through, and the second mounting hole is in communication with the cavity; and
the reinforcing member is at least partially accommodated in the cavity, the reinforcing member abuts against two opposite cavity wall surfaces of the cavity in the first direction, a third mounting hole is disposed at a position of the reinforcing member corresponding to the second mounting hole, and the third mounting hole is configured to engage with the locking member.

9. The battery according to any one of claims 1 to 8, wherein in the first direction, the thermal management component has a first surface facing away from the supporting member, and the battery cell group is bonded to the first surface; and
the thermal management component is provided with an edge portion, which is arranged along an edge of the thermal management component and protrudes from the first surface.

10. The battery according to any one of claims 1 to 8, wherein the thermal management component comprises a first plate body and a second plate body, the second plate body is located between the first plate body and the supporting member in the first direction, a groove is formed in one side of the second plate body facing the first plate body, and the first plate body is connected to the second plate body and covers the opening of the groove, so that the groove forms a flow channel located inside the thermal management component.

11. The battery according to claim 10, wherein the battery further comprises a bonding layer connecting the second plate body and the supporting member; and
in the first direction, protrusions are formed at positions corresponding to the groove on one side of the second plate body facing the supporting member, an accommodating groove located between two adjacent protrusions is formed on the side of the second plate body facing the supporting member, and at least a part of the bonding layer is accommodated in the accommodating groove.

12. The battery according to claim 10 or 11, wherein in the first direction, the first plate body has a first surface facing away from the second plate body, and the battery cell group is bonded to the first surface; and
an edge portion is disposed on the first plate body, is disposed along the edge of the first plate body, and protrudes from the first surface.

13. The battery according to any one of claims 10 to 12, wherein the first plate body and the second plate body are connected by welding.

14. The battery according to any one of claims 10 to 13, wherein the groove is formed in the second plate body by stamping.

15. An electrical device, comprising the battery according to any one of claims 1 to 14, the battery being used to supply electric energy to the electrical device.
